# EUROPÄISCHE PATENTANMELDUNG

(11) **EP 4 552 455 A1**
(43) Veröffentlichungstag der Anmeldung: **14.05.2025**
(21) Anmeldenummer: 24203502.0
(22) Anmeldetag: 30.09.2024
(51) Int. Cl.: A01B 69/04, A01D 41/127, G05D 1/698, G01C 21/00, G01C 21/20, G05D 105/15, G05D 107/20, G05D 109/10

(54) **ROUTENPLANUNGSSYSTEM AUTONOMER LANDWIRTSCHAFTLICHER ARBEITSMASCHINEN**

(30) Priorität: 08.11.2023 DE 102023130890
(71) Anmelder: CLAAS KGaA mbH, 33428 Harsewinkel (DE)
(72) Erfinder: PETERS, Stefan, 48147 Münster (DE); FISCHER, Josef, 88400 Biberach (DE); WIECKHORST, Jan Carsten, 29525 Uelzen Orsteil Hanstedt 2 (DE); REDENIUS, Jannik, 32361 Pr. Oldendorf (DE); SCHRÖDER, Axel, 33332 Gütersloh (DE); MONKENBUSCH, Robin, 33378 Rheda-Wiedenbrück (DE); HÜLSMANN, Felix, 33615 Bielefeld (DE); VERPLOEGEN, Thijs, 40625 Düsseldorf (DE)
(74) Vertreter: CLAAS Gruppe

(57) **Zusammenfassung**

Die Erfindung betrifft ein Routenplanungssystem (26) welches vorgesehen und eingerichtet ist, den Routenplan (19, 28) einer autonomen landwirtschaftlichen Arbeitsmaschine (14) und/oder eines Verbundes (15) autonomer landwirtschaftlicher Arbeitsmaschinen (14) zu erstellen, wobei die jeweilige landwirtschaftliche Arbeitsmaschine (2) in einem teilautonomen Betriebsmodus (13), in welchem sich ein Bediener (10) an Bord der landwirtschaftlichen Arbeitsmaschine (2) befindet oder einem vollautonomen Betriebsmodus (11), in welchem der landwirtschaftlichen Arbeitsmaschine (2) kein Bediener (10) zugeordnet ist betrieben wird und der erstellte Routenplan (19, 28) ereignisabhängig dynamisch angepasst wird und der dynamisch angepasste Routenplan (19, 28) an die autonome landwirtschaftliche Arbeitsmaschine (14) übermittelt wird und der Bediener (10) oder ein der jeweiligen autonomen landwirtschaftlichen Arbeitsmaschine (14) zugeordneter Operator (29) den angepassten Routenplan (19, 28) für die jeweilige landwirtschaftliche Arbeitsmaschine (2) annehmen muss.

## Beschreibung

Die Erfindung betrifft ein Routenplanungssystem nach dem Oberbegriff des Anspruchs 1, welches eingerichtet ist, den Routenplan einer oder mehrerer autonomer landwirtschaftlicher Arbeitsmaschinen zu erstellen.

Aus dem Stand der Technik sind verschiedenste Routenplanungssysteme bekannt, die das Zusammenarbeiten mehrerer landwirtschaftlicher Arbeitsmaschinen auf einem zu bearbeitenden Territorium beschreiben. Beispielhaft sei hier auf die DE 10 2006 015 204 A1 verwiesen, in welcher die Zusammenarbeit von landwirtschaftlichen Erntemaschinen, hier Mähdrescher, auf einem zu bearbeitenden Territorium offenbart ist. Die landwirtschaftlichen Arbeitsmaschinen generieren einen gemeinsam abzuarbeitenden Routenplan, wobei sichergestellt werden soll, dass jeder Bereich des zu bearbeitenden Territoriums von jeweils nur einer Maschine bearbeitet wird. Derartige System haben den Nachteil, dass sie stets nur gleichzeitig in einem Territorium eingesetzte Arbeitsmaschinen berücksichtigen können, und zudem wird vermieten, dass die zusammenarbeitenden landwirtschaftlichen Arbeitsmaschinen denselben Bereich des zu bearbeitenden Territoriums bearbeiten.

Weiter ist es aus der DE 10 2005 059 003 A1 bekannt, dass ein Routenplan einer als Mähdrescher ausgeführten landwirtschaftlichen Arbeitsmaschine dynamisch an sich ändernde Positionen des Mähdreschers angepasst werden kann.

Während die aus DE 10 2006 015 204 A1 und DE 10 2005 059 003 A1 bekannten Routenplanungssysteme für bemannte landwirtschaftliche Arbeitsmaschinen konzipiert sind setzten sich heute zunehmend autonom agierende landwirtschaftliche Arbeitsmaschinen, die in einer Ausbaustufe gänzlich ohne Fahrer auskommen, durch. Für derartige landwirtschaftliche Arbeitsmaschinen sind u.a. aus EP 3 970 463 A1 und DE 10 2020 109 013 A1 Routenplanungssysteme bekannt geworden, die Routenpläne für autonom betriebene landwirtschaftliche Arbeitsmaschinen generieren, wobei die Routenpläne in der Regel vorab generiert werden und dann an ihre Grenzen stoßen, wenn während der Abarbeitung der vorgeplanten Routenpläne im Feldeinsatz Ereignisse eintreten, die die jeweilige landwirtschaftliche Arbeitsmaschine zwingen von der vorgeplanten Fahrtroute abzuweichen.

Es ist deshalb Aufgabe der Erfindung die beschriebenen Nachteile des Standes der Technik zu vermeiden und insbesondere ein Routenplanungssystem vorzuschlagen, welches flexibel auf sich ändernde Bedingungen bei Abarbeitung eines vorgeplanten Routenplans reagieren kann.

Diese Aufgabe wird erfindungsgemäß durch die kennzeichnenden Merkmale des Anspruchs 1 gelöst.

Indem ein Routenplanungssystem vorgesehen und eingerichtet ist, den Routenplan einer autonomen landwirtschaftlichen Arbeitsmaschine und/oder eines Verbundes autonomer landwirtschaftlicher Arbeitsmaschinen zu erstellen, wobei die jeweilige landwirtschaftliche Arbeitsmaschine in einem teilautonomen Betriebsmodus, in welchem sich ein Bediener an Bord der landwirtschaftlichen Arbeitsmaschine befindet oder einem vollautonomen Betriebsmodus, in welchem der landwirtschaftlichen Arbeitsmaschine kein Bediener zugeordnet ist betrieben wird und der erstellte Routenplan ereignisabhängig dynamisch angepasst wird und der dynamisch angepasste Routenplan an die autonome landwirtschaftliche Arbeitsmaschine übermittelt wird und der Bediener oder ein der jeweiligen autonomen landwirtschaftlichen Arbeitsmaschine zugeordneter Operator den angepassten Routenplan für die jeweilige landwirtschaftliche Arbeitsmaschine annehmen muss wird sichergestellt, dass das Routenplanungssystem flexibel auf sich ändernde Bedingungen bei Abarbeitung eines vorgeplanten Routenplans reagieren kann. Zudem stellt eine derartige Struktur sicher, dass der geänderte Routenplan unter Sicherheitsaspekten nur dann angewendet wird, wenn ein autorisierter Prozessbeteiligter dies genehmigt.

In einer vorteilhaften Ausgestaltung der Erfindung ist der Bediener der Fahrer der landwirtschaftlichen Arbeitsmaschine und der Operator eine elektronische Identifikationseinrichtung, welche der jeweiligen autonomen landwirtschaftlichen Arbeitsmaschine zugeordnet ist, sodass auf technische einfache Weise diese zwingende Autorisierung umsetzbar ist.

Indem in einer weiteren vorteilhaften Ausgestaltung der Erfindung die eine oder mehreren autonomen landwirtschaftlichen Arbeitsmaschinen im Datenaustausch mit einem Planungsportal stehen und das Planungsportal vorgesehen und eingerichtet ist, den Arbeitsprozess der einen oder mehreren autonomen landwirtschaftlichen Arbeitsmaschinen zu überwachen und eine Ist-Bearbeitungssituation zu beschreiben welche die Eingangsgröße für eine ereignisabhängige dynamische Anpassung des Routenplans bildet, wobei das Planungsportal in Abhängigkeit von der Ist-Bearbeitungssituation eine Optimierung des Routenplans vorschlägt, wobei der Optimierungsvorschlag dann ignoriert wird, wenn der Bediener oder Operator den Optimierungsvorschlag ablehnt, wird sichergestellt, dass der zu erstellende Routenplan spezifisch an die tatsächliche Bearbeitungssituation angepasst wird und unter Berücksichtigung sicherheitsrelevanter Aspekte die Annahme von einem autorisierten Prozessbeteiligten vorgenommen wird.

In einer vorteilhaften Ausgestaltung wird auf technisch einfache Weise die Annahme des Optimierungsvorschlags von einem Bediener durch Eingabe an einem Terminal oder mittels einer mobilen APP-Anwendung oder von dem der fahrerlosen landwirtschaftlichen Arbeitsmaschine zugeordneten Operator vorgenommen.

In einer vorteilhaften Weiterbildung der Erfindung ist das Routenplanungssystem weiter vorgesehen und eingerichtet, für die autonomen landwirtschaftlichen Arbeitsmaschinen einen gemeinsamen ereignisabhängig dynamisch angepassten Routenplan und/oder für jede landwirtschaftliche Arbeitsmaschine einen individualisierten ereignisabhängig dynamisch angepassten Routenplan zu generieren und die autonomen landwirtschaftlichen Arbeitsmaschinen weiter eingerichtet sind den oder die ereignisabhängig dynamisch angepassten Routenpläne zwischen den autonomen landwirtschaftlichen Arbeitsmaschinen auszutauschen. Dies hat insbesondere die Effekte, dass der jeweilige Routenplan ganz spezifische auf jede der autonomen landwirtschaftlichen Arbeitsmaschinen abgestimmt und zwischen diesen ausgetauscht werden kann. Zudem wird es auf diese Weise möglich, dass eine der in den Prozess integrierten autonomen landwirtschaftlichen Arbeitsmaschinen selbst den dynamisch angepassten Routenplan erstellt.

Indem weiter die jeweiligen gemeinsamen Routenpläne und die jeweiligen individualisierten Routenpläne Fahrtrouten umfassen, wobei jeder landwirtschaftlichen Arbeitsmaschine in dem jeweiligen Routenplan eine individualisierte Fahrtroute zugeordnet ist ergibt sich ein einfaches Steuerungskonzept für alle in den Arbeitsprozess integrierten landwirtschaftlichen Arbeitsmaschinen.

Indem die auf einem zu bearbeitenden Territorium agierenden autonomen landwirtschaftlichen Arbeitsmaschinen jeweils über eine Datenübertragungseinrichtung verfügen und die Datenübertragungseinrichtungen vorgesehen und eingerichtet sind einen Datenaustausch zwischen den autonomen landwirtschaftlichen Arbeitsmaschinen und dem Routenplanungssystem zu ermöglichen wird auf technisch einfache Weis dieser universelle Datenaustausch zwischen den Prozessbeteiligten ermöglicht.

In einer vorteilhaften Ausgestaltung der Erfindung kann die in einem teilautonomen Betriebsmodus betriebene autonome landwirtschaftliche Arbeitsmaschine zwischen vollautonomen Betriebsmodus und dem Normalbetrieb, dem manuellen Fahren, wechseln, sodass die autonome landwirtschaftliche Arbeitsmaschine in einem zu bearbeitenden Territorium eine Bearbeitung des Territoriums durchführen und in Abhängigkeit von der durchzuführenden Bearbeitung von einem autonomen Betrieb in einen manuellen Betrieb und umgekehrt wechseln kann. Dies hat insbesondere den Effekt, dass der Bediener der landwirtschaftlichen Arbeitsmaschine jederzeit die landwirtschaftliche Arbeitsmaschine selber steuern kann. Dies ist dann von Vorteil, wenn komplizierte Geländestrukturen einen Autonomiebetrieb riskant oder kompliziert gestalten.

In einer vorteilhaften Ausgestaltung der Erfindung ist das Ereignis, welches die ereignisabhängige dynamische Anpassung des Routenplans auslöst, das Abweichen der autonomen landwirtschaftlichen Arbeitsmaschine von einer geplanten Fahrtroute aufgrund einer Umfahrung eines Hindernisses, wobei das Hindernis ein statisches und/oder nichtstatisches Hindernis sein kann. Eine derartige Ausgestaltung hat insbesondere den Effekt, dass die dynamische Anpassung des Routenplan sicherstellt, dass Bereiche des zu bearbeitenden Territoriums weder unbearbeitet bleiben noch mehrfach bearbeitet werden.

In diesem Zusammenhang ist es auch von Vorteil, wenn das Ereignis, welches die ereignisabhängige dynamische Anpassung des Routenplans auslöst, das Abweichen des aktuellen Bearbeitungsstatus von dem der Routenplanung zugrunde liegenden Bearbeitungsstatus ist. Auf diese Weise kann sehr flexibel darauf reagiert werden, wenn mehr oder weniger Fahrzeuge als ursprünglich geplant zur Verfügung stehen, die im selben oder einem vorhergehenden Arbeitsgang eingesetzten landwirtschaftlichen Arbeitsmaschinen und die diesen zugeordneten Anbaugeräte andere Arbeitsbreiten aufweisen als in der Planung berücksichtigt wurde oder wenn landwirtschaftliche Arbeitsmaschinen dem Bearbeitungsprozess eines Territoriums hinzutretende oder aus diesem ausscheidenden.

In diesem Zusammen ist es gemäß einer weiteren Ausgestaltung der Erfindung zudem von Vorteil, wenn das Ereignis, welches die ereignisabhängige dynamische Anpassung des Routenplans auslöst eine Kombination aus mehreren Ereignissen ist. Auf diese Weise kann sehr flexibel auf Änderungen der verschiedensten Art im zu bearbeitenden Territorium reagiert werden.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Darstellung der an einem landwirtschaftlichen Prozess beteiligten autonomen landwirtschaftlichen Arbeitsmaschinen
- Figur 2: eine schematische Darstellung des erfindungsgemäßen Routenplanungssystems
- Figur 3: eine Ausgestaltung des erfindungsgemäßen Routenplanungssystems nach Figur 2

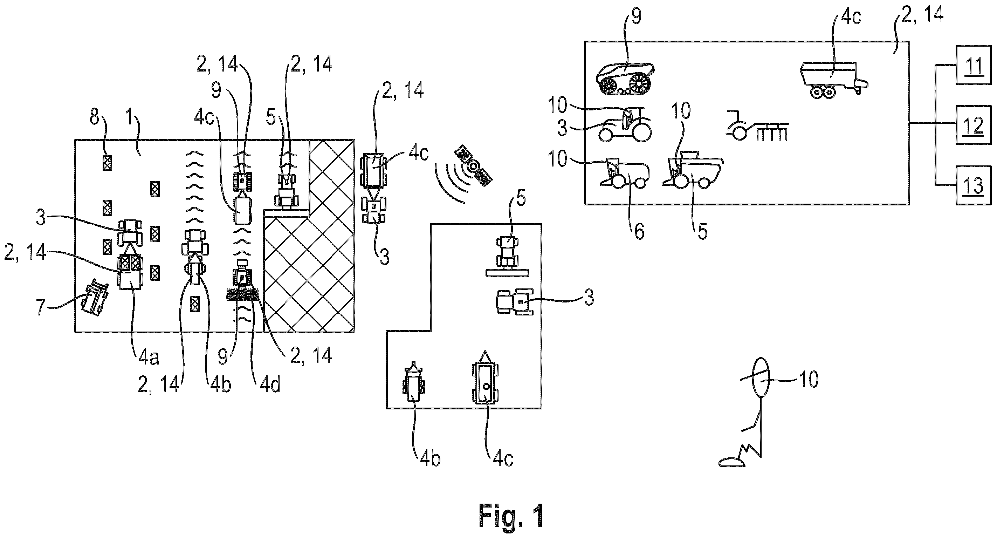

Figur 1 zeigt exemplarisch einen landwirtschaftlichen Anwendungsfall, wobei auf dem zu bearbeitenden Territorium 1 eine Vielzahl noch näher zu beschreibender landwirtschaftlicher Arbeitsmaschinen 2 agieren. Im hier dargestellten Ausführungsbeispiel ist eine Gruppe von landwirtschaftlichen Arbeitsmaschinen 2 als Traktor 3 ausgeführt und mit unterschiedlichsten Anbaugeräten 4, hier Pritschenwagen 4a, Quaderballenpresse 4b und Ladewagen 4c, gekoppelt. Als weitere Beispiele für landwirtschaftliche Arbeitsmaschinen 2 sind hier ein Mähdrescher 5 und ein Feldhäcksler 6 beispielhaft gezeigt. Zudem ist ein sogenannter Teleskoplader 7 dargestellt, der regelmäßig zum Laden der auf dem zu bearbeitenden Territorium 1 abgelegten Erntegutballen 8 eingesetzt wird. Weiter umfasst der dargestellte landwirtschaftliche Anwendungsfall als autonome Arbeitseinheiten 9 ausgeführte landwirtschaftliche Arbeitsmaschinen 2, wobei die autonomen Arbeitseinheiten 9 mit unterschiedlichsten Anbaugeräten 4 ausgerüstet sein können, hier etwa mit Bodenbearbeitungsgeräten 4d oder Ladewagen 4c.

Die an sich bekannten und daher hier nicht näher beschriebenen autonomen Arbeitseinheiten 9 sind so beschaffen, dass sie ausschließlich ohne einen Bediener 10 betrieben werden und daher stets in einem vollautonomen Betriebsmodus 11 arbeiten.

Die weiteren in Figur 1 gezeigten landwirtschaftlichen Arbeitsmaschinen 2, hier der Traktor 3, der Mähdrescher 5, der Feldhäcksler 6 sowie der Teleskoplader 7 werden im Normalbetrieb 12 von einem Bediener 10 betrieben. In noch näher zu beschreibender Weise können diese landwirtschaftlichen Arbeitsmaschinen 2 aber auch so ausgerüstet sein, dass die jeweilige landwirtschaftlicher Arbeitsmaschine 2 in einem teilautonomen Betriebsmodus 13 betrieben werden kann, wobei sich bei Aktivierung des teilautonomen Betriebsmodus 13 der Bediener 10 zwar weiterhin auf der jeweiligen landwirtschaftlichen Arbeitsmaschine 2 befindet, jedoch nicht mehr in den Steuer- und Regelprozess der jeweiligen landwirtschaftlichen Arbeitsmaschine 2 eingebunden ist.

Im Folgenden werden die in dem vollautonomen Betriebsmodus 11 betreibbaren autonomen Arbeitseinheiten 9 und die im teilautonomen Betriebsmodus 13 betreibbaren landwirtschaftlichen Arbeitsmaschinen 2 gemeinschaftlich als autonome landwirtschaftliche Arbeitsmaschinen 14 bezeichnet.

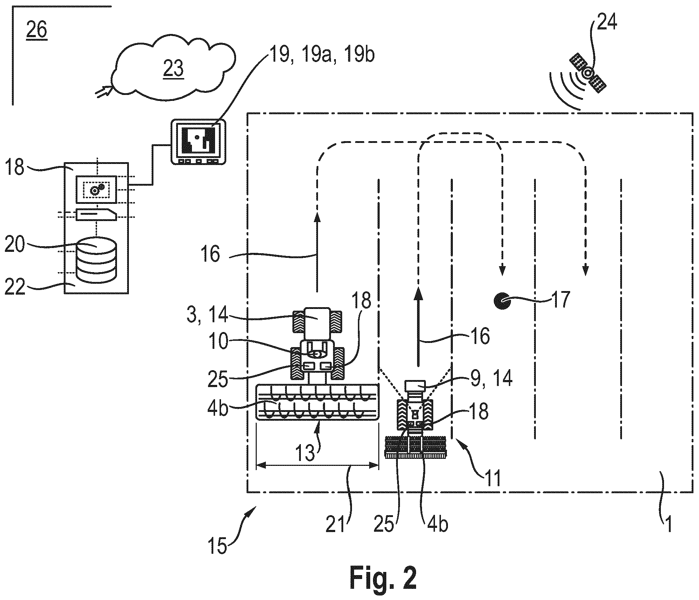

Figur 2 beschreibt nun die Erfindung am Beispiel einer Traktor-Anbaugerät-Kombination, hier Traktor 3 kombiniert mit Bodenbearbeitungsgerät 4b, und einer Kombination aus autonomer Arbeitseinheit 9 und dieser zugeordnetem ebenfalls als Bodenbearbeitungsgerät 4b ausgeführtem Anbaugerät 4 näher. Um das Wesen der Erfindung besser hervorzuheben, wurde für den Traktor 3 und die autonome Arbeitseinheit 9 jeweils das gleiche Anbaugerät 4 gewählt. Der Traktor 3 und die autonome Arbeitseinheit 9 bilden erfindungsgemäß jeweils eine autonome landwirtschaftliche Arbeitsmaschine 14, die entweder jede für sich auf einem zu bearbeitenden Territorium 1 oder, wie dargestellt, in einem Verbund 15 autonomer landwirtschaftlicher Arbeitsmaschinen 14 auf dem zu bearbeitenden Territorium 1 eingesetzt sein können. Wie bereits beschrieben kann der Traktor 3, aufgrund dessen, dass dieser über einen Bediener 10 verfügt in einem teilautonomen Betriebsmodus 13 betrieben werden, während die autonome Arbeitseinheit 9 ausschließlich in einem autonomen Betriebsmodus 11 betrieben werden kann.

Jede der autonomen landwirtschaftlichen Arbeitsmaschinen 14 bearbeitet das Territorium 1 in an sich bekannter Weise entlang von Fahrtrouten 16. Bei Einmaschinenbetrieb müssen die Fahrtrouten 16 so angelegt sein, dass die einzige autonome landwirtschaftliche Arbeitsmaschine 14 das Territorium 1 vollständig bearbeitet und Doppelbearbeitung des Territoriums 1 vermieden wird. Werden die autonomen landwirtschaftlichen Arbeitsmaschinen 14 in einem Verbund 15 auf dem Territorium 1 eingesetzt muss zudem sichergestellt werden, dass eine Kollision der landwirtschaftlichen Arbeitsmaschinen 14 untereinander vermieden wird. Dies verlangt zunächst, dass die landwirtschaftlichen Arbeitsmaschinen 14 die jeweiligen Positionen der anderen landwirtschaftlichen Arbeitsmaschinen 14 kennen. Zudem müssen die Fahrtrouten 16 aller auf einem Territorium 1 eingesetzten autonomen landwirtschaftlichen Arbeitsmaschinen 14 so beschaffen sein, dass sie Hindernisse 17 umfahren, wobei Hindernisse entweder stationäre Hindernisse, wie etwa Stromleitungsmasten oder Bäume, oder mobile Hindernisse, wie Tiere, Menschen oder Fahrzeuge, sein können.

Aus dem Stand der Technik ist es bekannt, in einer zentralen Datenverarbeitungseinrichtung 18 einen Routenplan 19 für die Bearbeitung des Territoriums 1 in einem Planungsschritt 20 vorzuplanen. In diesem Planungsschritt 20 werden unter anderem die Abmessungen des zu bearbeitenden Territoriums 1 und die Arbeitsbreite 21 des jeweiligen Anbaugerätes 4 berücksichtigt. Die bekannten Routenplanungssysteme sind zudem so beschaffen, dass sie entweder für die einzige autonome landwirtschaftliche Arbeitsmaschine 14 oder jede autonome landwirtschaftlicher Arbeitsmaschine 14 eines Verbundes 15 einen individualisierten Routenplan 19a oder für alle autonomen landwirtschaftlichen Arbeitsmaschinen 14 eines Verbundes 15 einen gemeinsamer Routenplan 19b generieren. Die den jeweiligen Routenplan 19 generierende Datenverarbeitungseinrichtung 18 kann einem zentralen Server 22, einer Cloud 23 oder einer der autonomen landwirtschaftlichen Arbeitsmaschinen 14 zugeordnet sein. Weiter kann der Routenplan 19 GPS-basiert 24 an die autonomen landwirtschaftlichen Arbeitsmaschinen 14 übertragen werden. Damit dies möglich wird sind den autonomen landwirtschaftlichen Arbeitsmaschinen 14 Sende- und Empfangseinheiten 25 zugeordnet, sodass jede der autonomen landwirtschaftlichen Arbeitsmaschinen 14 Daten empfangen und senden kann. Nachfolgend werden zumindest die Datenverarbeitungseinrichtung 18, der oder die von ihr generierten Routenpläne 19, 19a, 19b, die GPS-basierte Datenübertragung 24 sowie die Sende- und Empfangseinheiten 25 gemeinschaftlich als das noch detailliert zu beschreibende erfindungsgemäße Routenplanungssystem 26 bezeichnet.

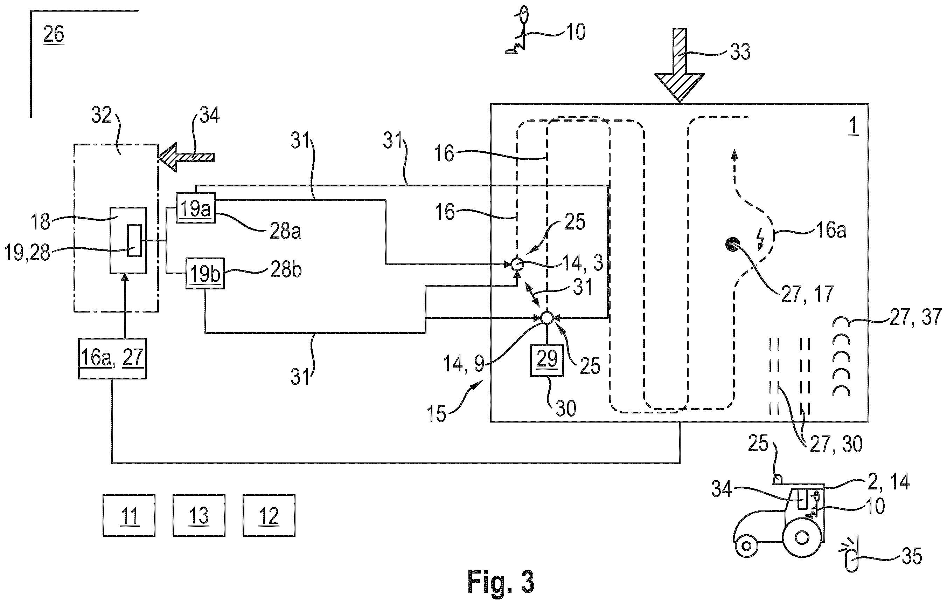

Figur 3 zeigt das erfindungsgemäße Routenplanungssystem 26 im Detail. Der von der Datenverarbeitungseinrichtung 18 generierte Routenplan 19 wird entweder als individualisierter Routenplan 19a individualisiert an jede auf dem Territorium 1 eingesetzte autonome landwirtschaftliche Arbeitsmaschine 14 übertragen oder als gemeinsamer Routenplan 19b an alle im Verbund 15 eingesetzten autonomen landwirtschaftlichen Arbeitsmaschinen 14 übertragen. Jeder Routenplan 19, 19a, 19b definiert für jede autonome landwirtschaftlicher Arbeitsmaschine 14 eine Fahrtroute 16, wobei die Fahrtrouten 16 so aufeinander abgestimmt sind, dass das Territorium 1 überlappungsarm von den autonom arbeitenden landwirtschaftlichen Arbeitsmaschinen 14 bearbeitet wird. Während des Abfahrens dieses vordefinierten Routenplans 19, 19a, 19b können nun noch näher zu beschreibende Ereignisse 27, etwa die bereits erwähnten stationären oder mobilen Hindernisse 17 auftreten, die eine Änderung 16a der Fahrtroute 16 auslösen. Würde jetzt der ursprünglich definierte Routenplan 19, 19a, 19b weiter abgearbeitet kann es einerseits zu Kollisionen zwischen den autonom arbeitenden landwirtschaftlichen Arbeitsmaschinen 14 kommen, oder das Territorium 1 wird zumindest im Bereich der Änderung 16a der Fahrtroute 16 nicht oder mehrfach bearbeitet. Hier setzt nun die Erfindung an, dass der erstellte Routenplan 19, 19a, 19b in Abhängigkeit von einem auftretenden Ereignis 27 ereignisabhängig dynamisch angepasst wird. In noch näher zu beschreibender Weise wird das Ereignis 27 und/oder die daraus resultierende Änderung 16a der jeweiligen Fahrtroute 16 an die Datenverarbeitungseinrichtung 18 übermittelt und in der Datenverarbeitungseinrichtung 18 wird sodann ein dynamisch angepasster Routenplan 28 erstellt, wobei der dynamisch angepasst Routenplan 28 in Abhängigkeit von der Anzahl der im Territorium 1 eingesetzten autonomen landwirtschaftlichen Arbeitsmaschinen 14 ein individualisierter Routenplan 28a oder ein gemeinsamer Routenplan 28b sein kann. Der jeweilige, dynamisch angepasste Routenplan 28, 28a, 28b wird sodann GPS-basiert 24 an die autonomen landwirtschaftlichen Arbeitsmaschinen 14 übermittelt, wobei der jeweils übermittelte Routenplan 28, 28a, 28b nicht automatisch die jeweils vorhanden Routenpläne 19, 19a, 19b ersetzt, sondern der ereignisabhängig dynamisch angepasste Routenplan 28a, 28b muss entweder von dem Bediener 10 oder einem der jeweiligen autonomen landwirtschaftlichen Arbeitsmaschine 14 zugeordneten Operator 29 angenommen werden und erst dann wird der aktive Routenplan 19 durch den ereignisabhängig dynamisch angepassten Routenplan 28 überschrieben. Der Bediener 10 kommt immer dann zum Einsatz, wenn die autonom fahrende landwirtschaftliche Arbeitsmaschine 14 wie bereits beschrieben beispielsweise als Traktor 3 mit Bediener 10 ausgeführt ist. Aufgrund dessen, dass die beschriebene autonome Arbeitseinheit 9 über keinen dieser unmittelbar zugeordneten Bediener 10 verfügt, ist dieser ein noch näher zu beschreibender sogenannter Operator 29 zugeordnet, der entweder ein an einer entfernten Stelle angeordneter menschlicher Bediener 10 oder an Stelle eines menschlichen Bedieners 10 im einfachsten Fall eine elektronische Identifikationseinrichtung 30 sein, welche die Entscheidung, den ereignisabhängig dynamisch angepassten Routenplan 28 anzunehmen oder abzulehnen treffen.

Technisch kann die ereignisabhängige dynamische Anpassung des Routenplans 28 in der Weise umgesetzt sein, das die eine oder die mehreren autonomen landwirtschaftlichen Arbeitsmaschinen 14 im Datenaustausch 31 mit einem Planungsportal 32 stehen und das Planungsportal 32 vorgesehen und eingerichtet ist, den Arbeitsprozess der einen oder mehreren autonomen landwirtschaftlichen Arbeitsmaschinen 14 zu überwachen und eine Ist-Bearbeitungssituation 33 zu beschreiben welche die Eingangsgröße 34 für eine ereignisabhängige dynamische Anpassung des Routenplans 28 bildet, wobei das Planungsportal 32 in Abhängigkeit von der Ist-Bearbeitungssituation 33 eine Optimierung 28 des Routenplans 19 vorschlägt, wobei der Optimierungsvorschlag 28 dann ignoriert wird, wenn der Bediener 10 oder der Operator 29 den Optimierungsvorschlag 28, den ereignisabhängig dynamisch angepassten Routenplan 28, ablehnt. Die Annahme des Optimierungsvorschlags 28 von einem Bediener 10 kann durch Eingabe an einem der jeweiligen landwirtschaftlichen Arbeitsmaschine 2 zugeordneten Terminal 34 oder mittels einer mobilen APP-Anwendung 35 erfolgen oder im Falle der autonomen Arbeitseinheit 9 vom beschriebenen Operator 29 vorgenommen werden.

Wie bereits beschrieben ist das erfindungsgemäße Routenplanungssystem 26 vorgesehen und eingerichtet, für die autonomen landwirtschaftlichen Arbeitsmaschinen 14 einen gemeinsamen ereignisabhängig dynamisch angepassten Routenplan 28b und/oder für jede landwirtschaftliche Arbeitsmaschine 14 einen individualisierten ereignisabhängig dynamisch angepassten Routenplan 28a zu generieren, wobei die autonomen landwirtschaftlichen Arbeitsmaschinen 14 weiter eingerichtet sind den oder die ereignisabhängig dynamisch angepassten Routenpläne 28, 28a, 28b zwischen den autonomen landwirtschaftlichen Arbeitsmaschinen 14 auszutauschen. Dies hat den Effekt, dass der zum Beispiel in dem entfernten Planungsportal 32 generierte Routenplan 28, 28a, 28b nur an eine autonome landwirtschaftlicher Arbeitsmaschine 14 zu übertragen wäre und von dort aus nur über kurze Distanzen der Datenübertragung zwischen den autonom arbeitenden landwirtschaftlichen Arbeitsmaschinen 14 ausgetauscht werden muss. Auf diese Weise würden Datenübertragungsprobleme, die bei Überwindung großer Distanzen auftreten können, reduziert.

Indem die gemeinsamen Routenpläne 28b und die individualisierten Routenpläne 28a jeweils Fahrtrouten 16 umfassen und jeder autonomen landwirtschaftlichen Arbeitsmaschine 14 in dem jeweiligen Routenplan 28a, 28b eine individualisierte Fahrtroute 16 zugeordnet ist kann jeder der autonomen landwirtschaftlichen Arbeitsmaschinen 14 sicher in dem zu bearbeitenden Territorium 1 agieren. Wie bereits beschrieben verfügen die auf dem zu bearbeitenden Territorium 1 agierenden autonomen landwirtschaftlichen Arbeitsmaschinen 14 jeweils über eine Datenübertragungseinrichtung 25, wobei die Datenübertragungseinrichtungen 25 vorgesehen und eingerichtet sind, einen Datenaustausch 31 zwischen den autonomen landwirtschaftlichen Arbeitsmaschinen 14 und dem Routenplanungssystem 26 zu ermöglichen. Auf diese Weise können die autonomen landwirtschaftlichen Arbeitsmaschinen 14 untereinander und mit beispielsweise dem Planungsportal 32 flexibel kommunizieren. Auf diese Weise wird es auch möglich, dass der zu generierende dynamisch angepasste Routenplan 28, 28a, 28b unmittelbar auf einer in den Arbeitsprozess integrierten autonomen landwirtschaftlichen Arbeitsmaschine 14 generiert werden kann. Dies hat den Vorteil, dass die jeweilige landwirtschaftliche Arbeitsmaschine 14 selbst den Ist-Bearbeitungszustand 33 mittel geeigneter Sensoren ermitteln kann.

Wird die autonome landwirtschaftliche Arbeitsmaschine 14, insbesondere der Traktor 3, in dem teilautonomen Betriebsmodus 13 betriebene kann die autonome landwirtschaftliche Arbeitsmaschine 14 zwischen einem vollautonomen Betriebsmodus 11 und einem manuellen Fahren, dem Normalbetrieb 12, wechseln, wobei die autonome landwirtschaftliche Arbeitsmaschine 14 in einem zu bearbeitenden Territorium 1 in Abhängigkeit von der durchzuführenden Bearbeitung von einem autonomen Betrieb in einen manuellen Betrieb und umgekehrt wechseln kann.

Wie bereits beschrieben wird der dynamisch angepasste Routenplan 28, 28a, 28b in Abhängigkeit von einem auftretenden Ereignis 27 angepasst, wobei das am häufigsten auftretende Ereignis 27 das Abweichen der autonomen landwirtschaftlichen Arbeitsmaschine 14 von einer geplanten Fahrtroute 16 aufgrund einer Umfahrung eines Hindernisses 17 ist und das Hindernis 17 ein statisches und/oder nichtstatisches Hindernis 17 sein kann.

Ein weiteres häufig auftretendes Ereignis 27 ist das Abweichen des aktuellen Bearbeitungsstatus von dem der Routenplanung 19 zugrunde liegenden Bearbeitungsstatus. Dieses Ereignis 27 tritt immer dann ein, wenn beispielsweise mehr oder weniger landwirtschaftliche Arbeitsmaschinen 14 als geplant zur Verfügung stehen, die landwirtschaftlichen Arbeitsmaschinen 14 mit Anbaugeräten 4 ausgerüstet sind, deren Arbeitsbreite 21 von der ursprünglich der Routenplanung zugrunde gelegten Arbeitsbreite 21 abweicht oder landwirtschaftliche Arbeitsmaschinen 14 aufgrund von Defekten aus einem Verbund 15 ausscheiden oder weitere landwirtschaftliche Arbeitsmaschinen 14 zusätzlich hinzutreten. Denkbare weitere Ereignisse 27 können auch im zu bearbeitenden Territorium 1 vorhandenen Fahrspuren 36 sein, die von den auf dem zu bearbeitenden Territorium 1 agierenden autonomen landwirtschaftlichen Arbeitsmaschinen 14 nachgenutzt werden sollen. In diesem Fall wäre der ursprünglich geplante Routenplan 19, 19a, 19b dann dynamisch so anzupassen, dass der neue Routenplan 28, 28a, 28b die jeweiligen Fahrtrouten so anpasst, dass die autonomen landwirtschaftlichen Arbeitsmaschinen 14 die vorhandenen Fahrspuren 36 nutzen können.

Ein weiteres Ereignis 27 kann beispielsweise die Lage eines Erntegutschwades 37 auf dem zu bearbeitenden Territorium 1 sein, wobei der dann dynamisch angepasste Routenplan 28, 28a, 28b einer als Feldhäcksler 6 ausgeführten autonomen landwirtschaftlichen Arbeitsmaschine 14 zur Verfügung gestellt wird.

Je nach den von den autonomen landwirtschaftlichen Arbeitsmaschinen 14 durchzuführenden Arbeiten auf dem jeweiligen Territorium 1 kann das Ereignis 27 auch eine Kombination aus verschiedensten Ereignissen 27 sein.

### Bezugszeichenliste:

| | | | |
|---|---|---|---|
| 1 | Territorium | 27 | Ereignis |
| 2 | landwirtschaftliche Arbeitsmaschine | 28 | Routenplan |
| 3 | Traktor | 28a | individualisierter Routenplan |
| 4 | Anbaugerät | 28b | gemeinsamer Routenplan |
| 4a | Pritschenwagen | 29 | Operator |
| 4b | Quaderballenpresse | 30 | Identifikationseinrichtung |
| 4c | Ladewagen | 31 | Datenaustausch |
| 4d | Bodenbearbeitungsgerät | 32 | Planungsportal |
| 5 | Mähdrescher | 33 | IST-Bearbeitungssituation |
| 6 | Feldhäcksler | 34 | Terminal |
| 7 | Teleskoplader | 35 | mobile APP-Anwendung |
| 8 | Erntegutballen | 36 | Fahrspur |
| 9 | autonome Arbeitseinheit | 37 | Erntegutschwad |
| 10 | Bediener | | |
| 11 | vollautonomer Betriebsmodus | | |
| 12 | Normalbetrieb | | |
| 13 | teilautonomer Betriebsmodus | | |
| 14 | Autonome landwirtschaftliche Arbeitsmaschine | | |
| 15 | Verbund | | |
| 16 | Fahrtroute | | |
| 17 | Hindernis | | |
| 18 | Datenverarbeitungseinrichtung | | |
| 19 | Routenplan | | |
| 19a | individualisierter Routenplan | | |
| 19b | gemeinsamer Routenplan | | |
| 20 | Planungsschritt | | |
| 21 | Arbeitsbreite | | |
| 22 | zentraler Server | | |
| 23 | Cloud | | |
| 24 | GPS | | |
| 25 | Datenübertragungseinrichtung | | |
| 26 | Routenplanungssystem | | |

## Patentansprüche

1. Routenplanungssystem (26) vorgesehen und eingerichtet, den Routenplan (19, 28) einer autonomen landwirtschaftlichen Arbeitsmaschine (2, 9, 14) und/oder eines Verbundes (15) autonomer landwirtschaftlicher Arbeitsmaschinen (2, 9, 14) zu erstellen, wobei die jeweilige landwirtschaftliche Arbeitsmaschine (2, 9, 14) in einem teilautonomen Betriebsmodus (13), in welchem sich ein Bediener (10) an Bord der landwirtschaftlichen Arbeitsmaschine (2, 9, 14) befindet oder einem vollautonomen Betriebsmodus (11), in welchem der landwirtschaftlichen Arbeitsmaschine (2, 9, 14) kein Bediener (10) zugeordnet ist betrieben wird,
**dadurch gekennzeichnet, dass**
der erstellte Routenplan (19, 28) ereignisabhängig dynamisch angepasst wird und der dynamisch angepasste Routenplan (19, 28) an die autonome landwirtschaftliche Arbeitsmaschine (14) übermittelt wird und der Bediener (10) oder ein der jeweiligen autonomen landwirtschaftlichen Arbeitsmaschine (14) zugeordneter Operator (29) den angepassten Routenplan (19, 28) für die jeweilige landwirtschaftliche Arbeitsmaschine (2) annehmen muss.

2. Routenplanungssystem (26) nach Anspruch 1,
**dadurch gekennzeichnet, dass**
das der Bediener (10) der Fahrer der landwirtschaftlichen Arbeitsmaschine (2, 14) ist und der Operator (29) eine elektronische Identifikationseinrichtung (30) ist, welche der jeweiligen autonomen landwirtschaftlichen Arbeitsmaschine (9, 14) zugeordnet ist.

3. Routenplanungssystem (26) nach einem der vorgeordneten Ansprüche,
**dadurch gekennzeichnet, dass**
die eine oder mehreren autonomen landwirtschaftlichen Arbeitsmaschinen (2, 9, 14) im Datenaustausch (31) mit einem Planungsportal (32) stehen und das Planungsportal (32) vorgesehen und eingerichtet ist, den Arbeitsprozess der einen oder mehreren autonomen landwirtschaftlichen Arbeitsmaschinen (14) zu überwachen und eine Ist-Bearbeitungssituation (33) zu beschreiben welche die Eingangsgröße für eine ereignisabhängige dynamische Anpassung des Routenplans (19, 28) bildet, wobei das Planungsportal (32) in Abhängigkeit von der Ist-Bearbeitungssituation (33) eine Optimierung des Routenplans (19, 28) vorschlägt, wobei der Optimierungsvorschlag (28) dann ignoriert wird, wenn der Bediener (10) oder Operator (29) den Optimierungsvorschlag (28) ablehnt.

4. Routenplanungssystem (26) nach Anspruch 3,
**dadurch gekennzeichnet, dass**
das die Annahme des Optimierungsvorschlags (28) von einem Bediener (10) durch Eingabe an einem Terminal (34) oder mittels einer mobilen APP-Anwendung (35) oder vom Operator (29) vorgenommen wird.

5. Routenplanungssystem (26) nach einem der vorgeordneten Ansprüche,
**dadurch gekennzeichnet, dass**
das Routenplanungssystem (26) weiter vorgesehen und eingerichtet ist, für die autonomen landwirtschaftlichen Arbeitsmaschinen (14) einen gemeinsamen ereignisabhängig dynamisch angepassten Routenplan (19b, 28b) und/oder für jede landwirtschaftliche Arbeitsmaschine (2) einen individualisierten ereignisabhängig dynamisch angepassten Routenplan (19a, 28a) zu generieren und die autonomen landwirtschaftlichen Arbeitsmaschinen (14) weiter eingerichtet sind den oder die ereignisabhängig dynamisch angepassten Routenpläne (19a..b, 28a..b) zwischen den autonomen landwirtschaftlichen Arbeitsmaschinen (14) auszutauschen.

6. Routenplanungssystem (26) nach Anspruch 5,
**dadurch gekennzeichnet, dass**
die jeweiligen gemeinsamen Routenpläne (19b, 28b) und die jeweiligen individualisierten Routenpläne (19a, 28a) Fahrtrouten (16) umfassen, wobei jeder landwirtschaftlichen Arbeitsmaschine (2, 14) in dem jeweiligen Routenplan (19a..b, 28a..b) eine individualisierte Fahrtroute (16) zugeordnet ist.

7. Routenplanungssystem (26) nach einem der vorhergehenden Ansprüche,
**dadurch gekennzeichnet, dass**
die auf einem zu bearbeitenden Territorium (1) agierenden autonomen landwirtschaftlichen Arbeitsmaschinen (14) jeweils über eine Datenübertragungseinrichtung (25) verfügen und die Datenübertragungseinrichtungen (25) vorgesehen und eingerichtet sind einen Datenaustausch (31) zwischen den autonomen landwirtschaftlichen Arbeitsmaschinen (14) und dem Routenplanungssystem (26) zu ermöglichen.

8. Routenplanungssystem (26) nach einem der vorhergehenden Ansprüche,
**dadurch gekennzeichnet, dass**
eine in einem teilautonomen Betriebsmodus (13) betriebene autonome landwirtschaftliche Arbeitsmaschine (14) zwischen vollautonomen Betriebsmodus (11) und dem Normalbetrieb (12), dem manuellen Fahren, wechseln kann und die autonome landwirtschaftliche Arbeitsmaschine (14) in einem zu bearbeitenden Territorium (1) eine Bearbeitung des Territoriums (1) durchführen und in Abhängigkeit von der durchzuführenden Bearbeitung von einem autonomen Betrieb in einen manuellen Betrieb und umgekehrt wechseln kann.

9. Routenplanungssystem (26) nach einem der vorhergehenden Ansprüche,
**dadurch gekennzeichnet, dass**
der dynamisch angepasste Routenplan (19, 28) auf einer autonomen landwirtschaftlichen Arbeitsmaschine (14) generiert wird.

10. Routenplanungssystem (26) nach Anspruch 1,
**dadurch gekennzeichnet, dass**
das Ereignis (27), welches die ereignisabhängige dynamische Anpassung des Routenplans (19, 28) auslöst, das Abweichen der autonomen landwirtschaftlichen Arbeitsmaschine (14) von einer geplanten Fahrtroute (16) aufgrund einer Umfahrung eines Hindernisses (17) ist und das Hindernis (17) ein statisches und/oder nichtstatisches Hindernis (17) sein kann.

11. Routenplanungssystem (26) nach Anspruch 1,
**dadurch gekennzeichnet, dass**
das Ereignis (27), welches die ereignisabhängige dynamische Anpassung des Routenplans (19, 28) auslöst, das Abweichen des aktuellen Bearbeitungsstatus von dem der Routenplanung zugrunde liegenden Bearbeitungsstatus ist, wobei das Ereignis das Vorhandensein von mehr oder weniger autonomen landwirtschaftlichen Arbeitsmaschinen (14) als geplant und / oder andere Arbeitsbreiten (21) eines der jeweiligen autonomen landwirtschaftlichen Arbeitsmaschine (14) zugeordneten Anbaugerätes (4) und/oder hinzutretende oder ausscheidende autonome landwirtschaftliche Arbeitsmaschinen (14) sein können.

12. Routenplanungssystem (26) nach den Ansprüchen 10 und 11,
**dadurch gekennzeichnet, dass**
das Ereignis (27), welches die ereignisabhängige dynamische Anpassung des Routenplans (19, 28) auslöst eine Kombination aus mehreren Ereignissen (27) ist.
